# EUROPEAN PATENT APPLICATION

(11) **EP 3 696 222 A1**
(43) Date of publication of application: **19.08.2020**
(21) Application number: 19157842.6
(22) Date of filing: 18.02.2019
(51) Int. Cl.: C08K 5/098, C09K 3/10

(54) **COMPOSITION COMPRISING A METAL SALT OF NEODECANOIC ACID**

(71) Applicant: Bostik SA, 92700 Colombes (FR)
(72) Inventor: OUWERKERK, Hendrik-Jan Dirk, 4283 JH Giessen (NB) (NL); SANDERS, Petrus Wilhelmus, 4283 JH Giessen (NB) (NL); MAAS, Jurgen Cornelis Henricus, 4283 JH Giessen (NB) (NL)
(74) Representative: Arkema Patent

(57) **Abstract**

The present invention concerns a curable composition, preferably a moisture-curable composition, comprising:
a) at least one silane-functional polymer P; and
b) at least one metal salt of neodecanoic acid wherein the metal salt is chosen from the group consisting of alkali metal salts and alkali earth metal salts.

## Description

The present invention relates to curable composition comprising metal salt of neodecanoic acid.

The present invention also relates to the uses of the curable composition.

### BACKGROUND

Silane-functional polymers are known to have properties such that they are cross-linked by siloxane bond formation involving reactions such as hydrolysis of the reactive silyl group due to moisture or the like, even at room temperature to provide cured products. Among these reactive silane-functional polymers, those polymers which have a main chain skeleton of a polyoxyalkylene polymer or a polyisobutylene polymer are known. These polymers have already been industrially produced and used in various applications such as sealants, adhesives, and coatings.

Curable compositions containing these silane-functional organic polymers further typically contain a silanol condensation curing catalyst in order to provide cured products. Common examples of the silanol condensation curing catalyst include organotin compounds having a carbon-tin bond, such as dibutyltin bis(acetylacetonate) and dibutyltin dilaurate. However, organotin compounds are known to be toxic, and it is expected that the scope of organotin compound restriction will soon include adhesives and sealants.

There is thus a need for new compositions which are less harmful than existing compositions.

There is also a need for new compositions which are less harmful and at the same time exhibits in the cured stated good adhesive and/or mechanical properties.

### DESCRIPTION OF THE INVENTION

The present invention concerns a curable composition, preferably a moisture-curable composition, comprising:
a) at least one silane-functional polymer P; and
b) at least one metal salt of neodecanoic acid, wherein the metal salt is chosen from
the group consisting of alkali metal salts and alkali earth metal salts.

According to the invention, the term "silane" or "organosilane" refers to compounds which on the one hand have at least one, customarily two or three, hydrolysable groups, preferably alkoxy groups or acyloxy groups, bonded directly to the silicon atom via Si-O bonds, and on the other hand have at least one organic radical bonded directly to the silicon atom via an Si-C bond.

Correspondingly, the term "silane group" identifies the silicon-containing group bonded to the organic radical of the silane, which is bonded by the Si-C bond to a compound. The silanes and their silane groups have in particular the property of undergoing hydrolysis in the event of contact with moisture. This produces organosilanols, i.e., silicon-organic compounds containing one or more silanol groups (Si-OH groups) and, through subsequent condensation reactions, organosiloxanes, in other words silicon-organic compounds containing one or more siloxane groups (Si-O-Si groups).

According to the invention, the term "silane-functional" identifies compounds which have silane groups. "Silane-functional polymers", accordingly, are polymers, more particularly organic polymers, which have at least one, preferably two or more, e.g., two silane groups. The silane groups may take the form of side groups or, preferably end groups.

### Silane-functional polymer P

According to an embodiment, the silane-functional polymer P comprises at least one group, preferably at least two groups, having the following formula (I):

-Si(R⁴)ₚ(OR⁵)₃₋ₚ (I)

in which:
- R⁴ is a linear or branched monovalent hydrocarbon radical having 1 to 10 carbon atoms, more preferably methyl or ethyl ;
- R⁵, identical or different, represents each an acyl radical, or a linear or branched, monovalent hydrocarbon radical having 1 to 10 carbon atoms, preferably from 1 to 5 carbon atoms, more particularly R⁵ being methyl or ethyl ;
- or two radicals R⁵ may form a cycle; and
- p is 0, 1 or 2.

In one embodiment, the silane-functional polymer P comprises at least one group having the formula (I) above wherein each occurrence of R⁵ represents an alkyl group comprising from 1 to 10 carbon atoms, preferably from 1 to 5 carbon atoms.

Preferably, the silane-functional polymer P comprises groups having the formula (I) above which are chosen from the group consisting of a trimethoxysilyl group, a triethoxysilyl group, a methyldimethoxysilyl group, a methyldiethoxysilyl group, a dimethylmethoxysilyl group, a dimethylethoxysilyl group.

More preferably, the silane-functional polymer P comprises trimethoxysilyl or triethoxysilyl end groups, even more preferably trimethoxysilyl end groups.

The groups having the formula (I) may be located at a main chain end, or at a side chain end, or at both ends. Preferably, the groups of formula (I) are located at main chain ends.

According to the invention, the silane-functional polymer P may have a polyether backbone, a polyester backbone, a poly(ether-ester) backbone, a polyolefin backbone, a polycaprolactone backbone, a polycarbonate backbone, a poly(ether-carbonate) backbone, a poly(meth)acrylate backbone, a polyacetal backbone, a polythioether backbone, a polyurethane backbone.

Preferably, the silane-functional polymer P has a polyether backbone.

The silane-functional polymer P may have a number-average molecular weight ranging from 500 to 100 000 g/mol, preferably ranging from 700 to 50 000 g/mol, more preferably from 1 000 to 30 000 g/mol, in particular from 1 000 to 22 000 g/mol.

The number-average molecular weight of the silane-functional polymer P can be measured by methods well known to those skilled in the art, for example by steric exclusion chromatography (SEC) using polystyrene type standards.

### Polymer P1

In one embodiment the silane-functional polymer P is a silane-functional polyurethane polymer P1 which is obtainable by the reaction of a silane having at least one group that is reactive toward isocyanate groups with a polyurethane polymer which contains isocyanate groups.

This reaction is preferably carried out in a excess of isocyanate groups.

In the reaction of the silane containing at least one group that is reactive toward isocyanate groups with a polyurethane polymer which contains isocyanate groups, the silane may in principle, albeit not preferably, be used in substoichiometric quantities, to give a silane-functional polymer which contains both silane groups and isocyanate groups.

For example, the silane which contains at least one group that is reactive toward isocyanate groups is a mercaptosilane or an aminosilane, more particularly an aminosilane.

Preferably, the aminosilane has the following formula (II):

R⁶-NH-R³-Si(R⁴)ₚ(OR⁵)₃₋ₚ (II)

wherein:
- R⁴, R⁵, and p are as defined above for the silane group of formula (I);
- R³ represents a linear or branched divalent hydrocarbon radical having from 1 to 12 carbon atoms, optionally comprising at least one heteroatom, preferably R³ represents an alkylene radical having from 1 to 6 carbon atoms, preferably methylene or propylene, more particularly a propylene; and
- R⁶ is a hydrogen atom, a linear or branched alkyl radical, an arylalkyl radical, a cyclic radical comprising from 1 to 20 carbon atoms, or a radical of the formula below:

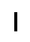

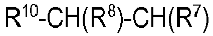

in which the radicals R⁷ and R⁸ are in each case independently of one another are a hydrogen atom or a radical from the group consisting of-R⁹, -COOR⁹ and -CN;
the radical R¹⁰ is a hydrogen atom, a radical from the group consisting of-CH₂-COOR⁹, -COOR⁹, -CONHR⁹, -CON(R⁹)₂, -CN;
the radical R⁹ being a hydrocarbon radical having 1 to 20 carbon atoms which optionally comprises at least one heteroatom.

In particular, R⁶ may be chosen from the following radicals:

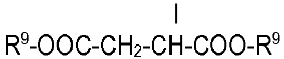

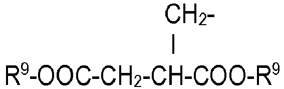

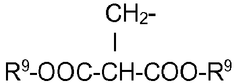

NC-CH₂-CH₂-

R⁹-OOC-CH₂-CH₂-

R⁹-NH-C(=O)-CH₂-CH₂-

(R⁹)₂N-C(=O)-CH₂-CH₂-

wherein R⁹ is as defined above.

Examples of suitable aminosilanes of formula (II) are primary aminosilanes such as for example 3-aminopropyltrimethoxysilane, 3-aminopropyldimethoxymethylsilane; secondary aminosilanes such as for example N-butyl-3-aminopropyltrimethoxysilane, N-phenyl-3-aminopropyltrimethoxysilane; the products of the Michael-like addition of primary aminosilanes such as for example 3-aminopropyltrimethoxysilane or 3-aminopropyldimethoxymethylsilane with Michael acceptors such as for example acrylonitrile, acrylic esters, acrylamides, maleic diesters, methylene malonate diesters, itaconic diesters, e.g., dimethyl and diethyl N-(3-trimethoxysilylpropyl)aminosuccinate; and also analogs of the stated aminosilanes having ethoxy groups instead of the methoxy groups on the silicon, preferably having ethoxy groups.

Typically, Michael acceptors are compounds which contain double bonds activated by electron acceptor radicals and which are therefore able to enter with primary amino groups (NH₂ groups) into nucleophilic addition reactions in a manner analogous to Michael addition (hetero-Michael addition).

Examples of polyurethane polymer containing isocyanate groups for producing a silane-functional polyurethane polymer P1 are polymers obtainable by the reaction of at least one polyol with at least one polyisocyanate, more particularly a diisocyanate. This reaction may be accomplished by bringing the polyol and the polyisocyanate to reaction with customary methods, as for example from temperatures of 50°C to 100°C, optionally in a presence of catalyst(s), the polyisocyanate being metered such that these isocyanate groups are in a stoichiometric excess in relation to the hydroxyl groups of the polyol.

The excess of polyisocyanate is selected in particular such that the amount of free isocyanate groups present in the resulting polyurethane polymer after the reaction of all of the hydroxyl groups of the polyol is from 0.1 to 5 wt % NCO, preferably 0.1 to 2.5 wt % NCO, more preferably 0.1 to 1 wt % NCO, based on the total weight of the polymer.

Preferred polyurethane polymers are those having the stated amount of free isocyanate groups and obtained from the reaction of diisocyanates with high molecular mass diols in an NCO/OH molar ratio of 1.5 to 2.2.

Suitable polyols for preparing the polyurethane polymer are, in particular, polyether polyols, polyester polyols, poly(ether-carbonate) and polycarbonate polyols, and also mixtures of these polyols. Particularly suitable are polyoxyethylene polyols (PEG), polyoxypropylene polyols (PPG), polyoxybutylene polyols (PBG) and poly(oxyethylene-oxypropylene) polyols more particularly polyoxypropylene diols, poly(oxyethylene-oxypropylene) diols, polyoxypropylene triols and poly(oxyethylene-oxypropylene) triols.

Preferred polyether polyols are polyoxyalkylene diols or polyoxyalkylene triols having a degree of unsaturation of less than 0.02 meq/g and having an average molecular weight in the range from 1 000 to 30 000 g/mol, and also polyoxyethylene diols, polyoxyethylene triols, polyoxypropylene diols, and polyoxypropylene triols having an average molecular weight of 400 to 22 000 g/mol. Likewise particularly suitable are so-called ethylene oxide-terminated ("EO-endcapped", ethylene oxide-endcapped) polyoxypropylene polyols.

Additionally suitable polyols may be polybutadiene polyols terminated with hydroxyl groups, examples being those polyols which are prepared by polymerization of 1,3-butadiene and allyl alcohol or by oxidation of polybutadiene, and also their hydrogenation products.

Additionally suitable polyols may be styrene-acrylonitrile-grafted polyether polyols, as available commercially for example under the trade name Lupranol® from Elastogran GmbH, Germany.

Particularly suitable polyester polyols are polyesters which carry at least two hydroxyl groups and are prepared by known methods, in particular by polycondensation of hydroxycarboxylic acids or polycondensation of aliphatic and/or aromatic polycarboxylic acids with dihydric or polyhydric alcohols.

Preferred polycarbonate polyols are those as obtainable by reaction, for example, of the abovementioned alcohols with dialkyl carbonates such as dimethyl carbonate, diaryl carbonates such as diphenyl carbonate or phosgene. Particularly suitable are polycarbonate diols, especially amorphous polycarbonate diols.

Preferred poly(ether-carbonate) polyols are those as obtainable by reaction, for example, of the abovementioned alcohols with alkylene oxide and dialkyl carbonates such as dimethyl carbonate, diaryl carbonates such as diphenyl carbonate or phosgene.

Further suitable polyols may be poly(meth)acrylate polyols.

Other suitable polyols may be natural polyhydroxy-functional fats and oils, more particularly castor oil, or so-called natural oil polyols (NOP) obtained by chemical modification of unsaturated natural oils and fats, for example by epoxidation of unsaturated oils and subsequent ring opening with carboxylic acids or alcohols, respectively, or polyols obtained by hydroformylation and hydrogenation of unsaturated oils (or unsaturated triglycerides) .

Other suitable polyols may be those obtained from natural fats and oils by degradation procedures such as alcoholysis or ozonolysis and subsequent chemical linkage, by transesterification or dimerization, for example, of the resultant degradation products or derivatives thereof. Suitable degradation products of natural fats and oils are, in particular, fatty acids, fatty alcohols and also fatty acid esters, in particular the methyl esters (FAME), which may be derivatized

Likewise suitable, furthermore, may be polyhydrocarbon polyols, also called oligohydrocarbonols, examples being polyhydroxy-functional ethylene-propylene, ethylenebutylene or ethylene-propylene-diene copolymers, as produced for example by KRATON Polymers, USA, or polyhydroxy-functional copolymers of dienes such as 1,3-butanediene, isoprene, myrcene, farnesene, isobutylene or diene mixtures and optional vinyl monomers such as styrene, acrylonitrile, more particularly the polyhydroxy-functional polybutadiene polyols, polyisoprene polyols or poly(butadiene-isoprene) polyols, examples being those which are prepared by copolymerization of 1,3-butadiene and allyl alcohol and may also have been hydrogenated.

These stated polyols preferably have an average molecular weight number (Mn) of 250 to 30 000 g/mol, more particularly of 1 000 to 22 000 g/mol, and an average OH functionality in the range from 1.6 to 3.

Preferred polyols are polyester polyols and polyether polyols, more particularly polyoxyethylene polyol, polyoxypropylene polyol, and polyoxypropylene-polyoxyethylene polyol, preferably polyoxyethylene diol, polyoxypropylene diol, polyoxyethylene triol, polyoxypropylene triol, polyoxypropylene-polyoxyethylene diol and polyoxypropylene-polyoxyethylene triol.

Further to these stated polyols, it is possible to use small amounts of low molecular mass dihydric or polyhydric alcohols as chain extender such as, for example, 1,2-ethanediol, 1,2- and 1,3-propanediol, neopentyl glycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, hydrogenated bisphenol A, dimeric fatty alcohols, 1,1,1-trimethylolethane, 1,1,1-trimethylolpropane, glycerol, pentaerythritol, sugar alcohols such as xylitol, sorbitol or mannitol, sugars such as sucrose, other higher polyhydric alcohols, low molecular mass alkoxylation products of the aforementioned dihydric and polyhydric alcohols, and mixtures of the aforementioned alcohols, when preparing the polyurethane polymer containing terminal isocyanate groups.

Polyisocyanates which can be used for preparing the polyurethane polymer are in particular commercial polyisocyanates, especially diisocyanates.

Suitable diisocyanates for example are 1,6-hexamethylene diisocyanate (HDI), 2-methylpentamethylene 1,5-diisocyanate, 2,2,4- and 2,4,4-trimethyl-1,6-hexamethylene diisocyanate (TMDI), 1,12-dodecamethylene diisocyanate, lysine and lysine ester diisocyanate, cyclohexane 1,3-diisocyanate, cyclohexane 1,4-diisocyanate, 1-isocyanato-3,3,5-trimethyl-5-isocyanatomethylcyclohexane (isophorone diisocyanate or IPDI), perhydro-2,4'-diphenylmethane diisocyanate and perhydro-4,4'-diphenylmethane diisocyanate, 1,4-diisocyanato-2,2,6-trimethylcyclohexane (TMCDI), 1,3- and 1,4-bis(isocyanatomethyl)cyclohexane, m- and p-xylylene diisocyanate (m- and p-XDI), m- and p-tetramethyl-1,3-xylylene diisocyanate, m- and p-tetramethyl-1,4-xylylene diisocyanate, bis(1-isocyanato-1-methylethyl)naphthalene, 2,4- and 2,6-tolylene diisocyanate (TDI), 4,4'-, 2,4'-, and 2,2'-diphenylmethane diisocyanate (MDI), 1,3- and 1,4-phenylene diisocyanate, 2,3,5,6-tetramethyl-1,4-diisocyanatobenzene, naphthalene 1,5-diisocyanate (NDI), 3,3'-dimethyl-4,4'-diisocyanatobiphenyl (TODD, oligomers and polymers of the aforesaid isocyanates, and also mixtures thereof.

The silane-functional polymer P1 may have the following formula (III) : 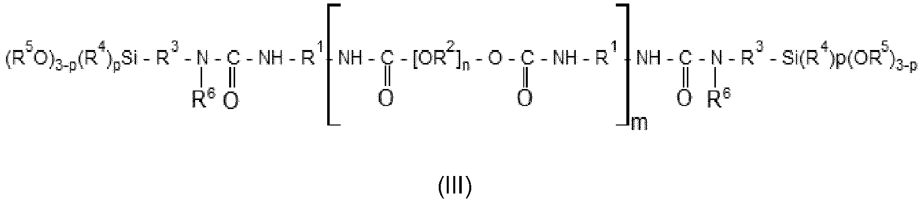 wherein:
- R¹ represents a hydrocarbon divalent radical comprising from 5 to 15 carbon atoms;
- R³ represents a divalent alkylene radical, linear or branched, comprising from 1 to 6 carbon atoms, preferably R³ representing methylene or n-propylene ;
- R² represents a divalent alkylene radical, linear or branched, comprising from 2 to 4 carbon atoms;
- R⁴ and R⁵, are each as defined above for formula (I);
- R⁶ is as defined above for compounds of formula (II);
- m is an integer different from 0;
- n and m are such that the number-average molecular weight of the polymer ranges from 500 g/mol to 50 000 g/mol, preferably from 700 g/mol to 22 000 g/mol ;
- p is 0, 1 or 2, p being preferably 0 or 1.

Suitable silane-functional polymers P1 are, for example, those available commercially under the trade names Polymer ST, as for example Polymer ST50, from HANSE CHEMIE, and also under the trade name DESMOSEAL® from BAYER.

### Polymer P2

In one embodiment, the silane-functional polymer P is in the form of a silane-functional polyurethane polymer P2, obtainable by the reaction of an isocyanatosilane with a polymer which has functional end groups that are reactive toward isocyanate groups, more particularly hydroxyl groups, mercapto groups and/or amino groups.

This reaction takes may take place in a stoichiometric ratio of the isocyanate groups to the functional end groups that are reactive toward isocyanate groups of 1:1, or with a slight excess of the functional end groups that are reactive toward isocyanate groups, as for example at temperatures of 20°C to 100°C, optionally in presence of catalysts.

Preferably, the isocyanatosilane having the following formula (IV):

NCO-R³-Si(R⁴)ₚ(OR⁵)₃₋ₚ (IV)

wherein R³, R⁴, R⁵ and p are as defined above for the silane group of formula (I), including the preferred embodiments.

Examples of suitable isocyanatosilanes of the formula (IV) are isocyanato-methyltrimethoxysilane, isocyanatomethyldimethoxymethylsilane, 3-isocyanatopropyltrimethoxysilane, 3-isocyanatopropyldimethoxymethylsilane, isocyanato-methyltriethoxysilane, isocyanatomethyldiethoxymethylsilane.

As functional end groups that are reactive toward isocyanate groups, the polymer preferably contains hydroxyl groups. Polymers containing hydroxyl groups are suitably, on the one hand, high molecular mass polyoxyalkylene polyols already stated, preferably polyoxypropylene diols having a degree of unsaturation of less than 0.02 meq/g and having an average molecular weight number (Mn) in the range from 4000 to 30 000 g/mol, especially those having an average molecular weight number (Mn) in the range from 8 000 to 22 000 g/mol.

Also suitable on the other hand for reaction with isocyanatosilanes of the formula (IV) may be polyurethane polymers containing hydroxyl groups, more particularly polyurethane polymers terminated with hydroxyl groups. Polyurethane polymers of this kind are typically obtainable through the reaction of at least one polyisocyanate with at least one polyol. This reaction may be accomplished by reacting the polyol and the polyisocyanate by customary methods, as for example at temperatures of 50°C to 100°C, optionally in presence of a catalyst, the polyol being metered such that its hydroxyl groups are in a stochiometric excess in relation to the isocyanate groups of the polyisocyanate. A preferred ratio of hydroxyl groups to isocyanate groups is from 1.3:1 to 4:1, more particularly from 1.8:1 to 3:1.

Polyols and polyisocyanates suitable for this reaction are typically the same as those already mentioned as being suitable for the preparation of a polyurethane polymer containing isocyanate groups that is used for the preparation of a silane-functional polyurethane polymer P1.

The silane-functional polymer P2 may have the following formula (V) : 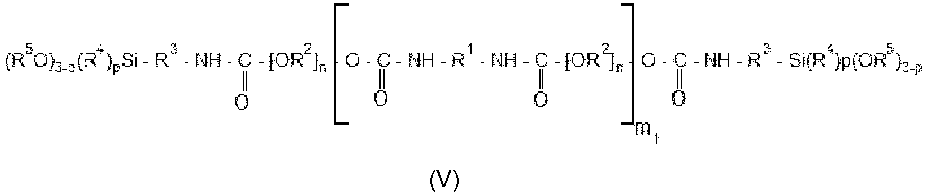 wherein:
- R¹ represents a hydrocarbon divalent radical comprising from 5 to 15 carbon atoms;
- R³ represents a divalent alkylene radical, linear or branched, comprising from 1 to 6 carbon atoms, preferably R³ representing methylene or n-propylene;
- R² represents a divalent alkylene radical, linear or branched, comprising from 2 to 4 carbon atoms;
- R⁴ and R⁵, identical or different, represents each a linear or branched alkyl radical comprising from 1 to 4 carbon atoms;
- n is an integer such that number average molecular weight of the polyether bloc -[OR²]ₙ-ranges from 300 g/mol to 30 000 g/mol in polymer of formula (V);
- m₁ is zero or an integer;
- n and m₁ are such that the number-average molecular weight of polymer of formula (V) ranges from 500 g/mol to 50 000 g/mol, preferably from 700 g/mol to 22 000 g/mol;
- p is 0, 1 or 2, p being preferably 0 or 1.

Suitable silane-functional polymers P2 for example are those available commercially under the trade names SPUR+1010LM, 1015LM, and 1050MM from MOMENTIVE, and also under the trade names GENIOSIL® STP-E15, STP-10, and STP-E35 from WACKER.

### Polymer P3

In another embodiment, the silane-functional polymer P is a silane-functional polymer P3 which is obtainable by a hydrosilylation reaction of polymers having terminal double bonds, examples being poly(meth)acrylate polymers or polyether polymers, more particularly of allyl-terminated polyoxyalkylene polymers, described for example in US 3,971,751 and US 6,207,766.

The silane-functional polymer P3 may have the following formula (VI) :

(R⁵O)₃₋ₚ(R⁴)ₚSi-R⁰-[OR²]ₙ-R⁰-Si(R⁴)ₚ(OR⁵)₃₋ₚ (VI)

wherein:
- R⁰ represents a divalent alkylene radical, linear or branched, comprising from 3 to 6 carbon atoms ;
- R² represents a divalent alkylene radical, linear or branched, comprising from 2 to 4 carbon atoms ;
- R⁴ and R⁵, identical or different, represents each a linear or branched alkyl radical comprising from 1 to 4 carbon atoms ;
- n is an integer such that number average molecular weight of the polyether bloc -[OR²]ₙ-ranges from 300 g/mol to 30 000 g/mol;
- p is 0, 1 or 2, p being preferably 0 or 1.

Preferably, the polymer P3 is such that:
- R⁰ represents propylene;
- R² represents a linear or branched divalent alkylene radical comprising 3 carbon atoms ;
- p = 0; and
- each occurrence of R⁵ represents methyl.

Suitable silane-functional polymers P3 for example are those available commercially under the trade names MS Polymer™ S203H, S303H, S227, S810, MA903, and S943, Silyl™ SAX220, SAX350, SAX400, SAX520 and SAX725, Silyl™ SAT350, and SAT400, and also XMAP™ SA100S and SA310S from Kaneka, and also under the trade names Excestar® S2410, S2420, S3430, S3630, W2450, and MSX931 from Asahi Glass.

Preferably, the curable composition of the present invention comprises:
a) at least one silane-functional polymer P3; and
b) at least one metal salt of neodecanoic acid.

The total weight content of silane-functional polymer(s) P into the composition may range from 5% to 80%, preferably from 10% to 60%, and more preferably from 15% to 50% by weight based on the total weight of the composition.

### Catalyst

The curable composition comprises at least one metal salt of neodecanoic acid, wherein the metal salt is chosen from the group consisting of alkali metal salts and alkali earth metal salts.

The at least one metal salt of neodecanoic acid is preferably a curing catalyst.

The group of alkali metals typically comprises lithium, sodium, potassium, rubidium and cesium. Within the group of alkali metals, potassium is particularly preferred.

The group of alkali earth metals typically comprises magnesium, calcium, strontium, barium, radium and beryllium.

Preferably, the metal salt of neodecanoic acid is chosen from the alkali metal salts of neodecanoic acid.

In one preferred embodiment, the metal salt of neodecanoic acid salt is potassium neodecanoate.

The total weight content of the metal salt(s) of neodecanoic acid in the composition may range from 0.01% to 5%, preferably from 0.1% to 2%, and more preferably from 0.2% to 1% by weight based on the total weight of the composition.

### Other components

The composition may further contain at least one additive for example chosen from the group consisting of: pigments, dyes, adhesion promoters, solvents, drying agents, molecular sieves, anti-oxidant, wetting-agents, UV absorber, reactive diluent, thixotropic agents, fillers, plasticizers, and mixtures thereof.

The composition of the invention may further comprise at least one plasticizer.

Suitable plasticizer may be chosen from esters of organic carboxylic acids or their anhydrides, such as fatty acid alkyl esters, adipates, such as dioctyl adipate, phtalates, polyols, such as polyoxyalkylene polyols or polyester polyols, organic phosphoric and sulfonic esters, mineral oils or polybutenes.

Preferably, the composition does not comprise phtalate-containing compounds, meaning in particular that the composition does not comprise phtalate-containing plasticizers.

Preferred plasticizers used are fatty acid alkyl esters, alkylsulfonic esters of phenol, mineral oils.

The plasticizer more preferably comprises diisononyl 1,2-cyclohexanedicarboxylate, alkylsulfonic esters of phenol such as Mesamoll®, rapeseed oil methyl esters, or a combination thereof.

The total weight content of plasticizer(s) in the composition may ranges from 5% to 60%, preferably from 10% to 50% by weight based on the total weight of the composition.

The composition of the invention may optionally comprise at least one filler, this being generally preferred. The filler may not only influence the rheological properties of the uncured composition but also the mechanical properties and the surface quality of the cured composition.

Examples of suitable fillers are inorganic and organic fillers, examples being natural, ground or precipitated calcium carbonates, with or without a coating of fatty acids, especially stearic acid, barium sulfate (BaSO₄, also called barite or heavy spar), calcined kaolins, aluminum oxides, aluminum hydroxides, silica, especially finely divided silica from pyrolysis operations, carbon blacks, especially industrial carbon black, PVC powders or hollow beads.

Preferred fillers are calcium carbonates, calcined kaolins, carbon black, finely divided silicas, and also flame-retardant fillers, such as hydroxides or hydrates, more particularly hydroxides or hydrates of aluminum, preferably aluminum hydroxide. It is entirely possible and may even be an advantage to use a mixture of different fillers.

The composition preferably comprises precipitated calcium carbonate as filler.

The total amount of fillers in the composition, where used, may vary from 80% to 10%, preferably from 60% to 20% by weight, based on the total weight of the composition.

The composition may optionally comprise at least one thixotropic agent, such as for example polyamide waxes, bentonites, fumed silicas, organically modified castor oil and amide waxes, or combinations thereof.

The organically modified castor oil may be, for example, a hydrogenated castor oil or another castor oil derivative. One example of a commercially available organically modified castor oil is Thixatrol®ST.

The composition may optionally comprise at least one adhesion promoters, such as for example epoxysilanes (meth)acrylosilanes, anhydridosilanes, or adducts of the aforesaid silanes with primary aminosilanes, and also aminosilanes or urea silanes.

As drying agent, mention may be made of vinyltrimethoxysilane (VTMO), vinyltriethoxysilane (VTEO), alkoxyarylsilanes such as GENIOSIL® XL 70 sold by WACKER.

When a drying agent is used, its content is preferably lower than 3 wt% based on the total weight of the composition.

Among UV anti-oxidant, the following compounds may be cited : benzotriazoles, benzophenones, sterically hindered amines such as for example bis(2,2,6,6,-tetramethyl-4-piperidyl)sebaceate, and mixtures thereof.

TINUVIN® 400 or TINUVIN™ 770 sold by BASF may be used as UV anti-oxidant.

Reactive diluent preferably comprises at least one functional group that reacts after application of the composition, for example with moisture or with atmospheric oxygen. Example of such groups are silyl groups, isocyanate groups, vinyl-unsaturated groups, and polyunsaturated systems.

The viscosity of the reactive diluent is preferably less than 20 000 mPa.s, particularly less than 6 000 mPa.s (determined by Brookfield RVT at 23°C).

Solvent can also be used in the composition, in particular for reducing its viscosity. Aliphatic or aromatic hydrocarbons, halogenated hydrocarbons, alcohols, ketones, esters, ethers may be used as solvents.

Preferably, the composition does not comprise guanidines and/or amidines.

Preferably, the composition is a tin-free composition.

In one preferred embodiment, the composition comprises:
a) from 5% to 80% of weight of silane-functional polymer(s) P;
b) from 0.01% to 5% by weight of metal salt(s) of neodecanoic acid wherein the metal salt(s) is chosen from the group consisting of alkali metal salts and alkali earth metal salts;
c) from 0% to 60%, preferably from 5% to 60% by weight of plasticizer(s); and
d) from 0% to 80%, preferably from 20% to 60% by weight of filler(s).

The composition may be manufactured using known methods, for example by mixing the components in particular in a suitable dispersion unit, for example high-speed mixer.

The mixing may be carried out at a temperature comprised between room temperature and 60°C.

Preferably, the catalyst is added after the silane-functional polymer and the optional other ingredients.

The composition of the invention comprising a silane-functional polymer are preferably moisture-curing, meaning that in the presence of water of moisture, more particularly atmospheric moisture, the hydrolysis and condensation reactions on the silane groups take place, causing crosslinking of the polymer molecules and curing of the composition. The curing is also referred as crosslinking.

The composition is preferably produced and stored in the absence of moisture. Advantageously, the composition is stable on storage, meaning that it can be kept in the absence of moisture in a suitable system, such as a cartridge, over a period ranging from several months up to a year or more, without undergoing any change in its application properties or in its properties after curing. The stability is typically determined via measurement of the viscosity or extrusion force or application rate at as specified applied pressure.

In the cured state, the composition of the present invention advantageously exhibits:
- a secant modulus at 100% extension at 23°C of less than or equal to 0.4 MPa;
- a secant modulus at 100% extension at -20°C of less than or equal to 0.6 MPa; and
- an elastic recovery at 100% elongation of greater than or equal to 70%.

The secant modulus is determined at 100% elongation and 23°C or-20°C in accordance with ISO 8339 (2005-06), on mortar substrate M1 as defined according to ISO 13640 (1999-12), with a preconditioning carried out in accordance with method B of ISO 8339 (2005-06).

The elastic recovery is determined at 100% elongation and 23°C in accordance with ISO 7389 (2004-04), on anodized aluminium, with a preconditioning carried out in accordance with method B of ISO 7389 (2004-05).

Advantageously, the composition in the cured state, is classified as low modulus sealant, in particular is classified 25LM according to EN 15651-1 (2012-11) and EN 15651-4 (2017-04) (meaning that it meets the requirements contained in that standard for class 25LM therein).

### Uses

The present invention also relates to the use of the composition as defined above, as an adhesive, a sealant and/or a coating material, in particular as a sealant for example construction sealant and even more preferably as exterior facing sealant.

The composition may be used for application to concrete, mortar, brick, tile, natural stone, glass, glass-ceramic, metal or metal alloy, wood, plastic. Application to construction materials is preferred.

The composition is applied preferably in a temperature range from 5° to 50°C, and may cure under these conditions.

The present invention also concerns the use of at least one neodecanoic acid metal salt wherein the metal salt is chosen from the group consisting of alkali metal salts and alkali earth metal salts, in presence of a silane-functional polymer (in particular such as defined above) for preparing a composition, preferably a sealant composition, having in the cured state the following properties:
- a secant modulus at 100% extension at 23°C of less than or equal to 0.4 MPa;
- a secant modulus at 100% extension at -20°C of less than or equal to 0.6 MPa; and
- an elastic recovery at 100% elongation of greater than or equal to 70%.

According to the present invention, by « comprised between x and y », or « ranging from x to y », it is meant a range wherein limits x and y are included. For example, the range "comprising between 1% and 3%" includes in particular 1% and 3%.

### EXPERIMENTAL PART

### Test methods

The secant modulus was determined at 100% elongation and 23°C or -20°C in accordance with ISO 8339 (2005-06), on mortar substrate M1 as defined according to ISO 13640 (1999-12), with a preconditioning carried out in accordance with method B of ISO 8339 (2005-06).

The elastic recovery was determined at 100% elongation and 23°C in accordance with ISO 7389 (2004-04), on anodized aluminium with a preconditioning carried out in accordance with method B of ISO 8339 (2005-06).

The measure of the skin formation (or « skinning time ») was carried out with a controlled atmosphere at a temperature of 20°C, and a relative humidity of 28%. In this test, a wooden spatula is used to evaluate the presence of a skin on the sealant by lightly touching it on timed intervals and checking for residual material on the spatula. The composition was applied in a long strip with a diameter of around 10 mm. After the application, a clock was started, and it was examined every minutes by lightly touching with the spatula if the film is dry or if a residual material is transferred onto the spatula. The skinning time is the time until the composition film is dry and no residue remains on the spatula. The skinning time is expressed in minutes.

The curing after 24h ("cure 24h") was investigated by first filling a 2x2cm U-shaped aluminium profile with sealant, avoiding the formation of air bubbles and trimming the sample in a way so that a smooth surface is obtained. The filled profile was then placed in a climatized environment (23°C, 50%R.H.) and after 24 hours, a 1x1cm square was cut out of the sealant material, trimming the uncured material and leaving it to cure. After curing said sample, the thickness of the cut-out material was measured using a thickness gauge having a precision of 0,05 mm.

The following ingredients were used for the preparation of a sealant composition:
- MS POLYMER® SAX 520: trimethoxysilyl-terminated polypropylene, commercialized by KANEKA;
- MS Plasticiser® RD 359: reactive diluent - silane-modified polyether commercialized by KANEKA;
- HEXAMOLL® DINCH: 1,2-cyclohexane dicarboxylic acid diisononyl ester (plasticizer) commercialized by BASF;
- CRAVALLAC® SLT : polyamide wax commercialized by ARKEMA ;
- HAKUENKA® CCR-S10: precipitated calcium carbonate (filler) commercialized by OMYA;
- OMYACARB® 2T-AV: surface-coated grinded calcium carbonate (filler) commercialized by OMYA;
- DYNASYLAN® VTMO : vinyltrimethoxysilane commercialized by EVONIK;
- TITAAN® R218 : titanium oxide commercialized by TIKON;
- DAMO-T® : N-2-aminoethyl-3-aminopropyl)trimethoxysilane commercialized by EVONIK;
- DYNASYLAN® A1146 : oligomeric mixture of DAMO-T commercialized by EVONIK;
- TIB KAT® K30: potassium neodecanoate (catalyst - 25% by weight in HEXAMOLL DINCH) commercialized by TIB CHEMICALS;
- VP15-794: sodium neodecanoate (catalyst - 15-25% by weight in diisononyl phthalate) commercialized by TIB CHEMICALS;
- TIB KAT® 816: zirconium octoate (catalyst) commercialized by TIB CHEMICALS.

The following compositions were prepared as follows, with the ingredients and quantities mentioned in table 1 below: The materials were blended together using a Hauschild Rotary Speedmixer (Type: DAC 600FVZ), resulting in material having a maximum temperature of 50°C.

**Table 1 : compositions A to C**

| | **A (comparative)** | **B** | **C** |
|---|---|---|---|
| MS Polymer SAX 520 | 20% | 20% | 20% |
| MS Plasticiser RD 359 | 8% | 8% | 8% |
| HEXAMOLL DINCH | 8% | 8% | 8% |
| CRAYVALLAC SLT | 4% | 4% | 4% |
| DYNASYLAN® VTMO | 4% | 4% | 4% |
| TITAAN R218 | 4% | 4% | 4% |
| HAKUENKA CCR-S10 | 25% | 25% | 25% |
| OMYACARB 2T-AV | 25% | 25% | 25% |
| DYNASILANE A1146 | 1% | 1% | 1% |
| TIB KAT® 816 (Zr-Octoate) | 1% | | |
| TIB KAT® K30 (K-Neodecanoate) | | 1% | |
| VP 15-794 (Na-Neodecanoate) | | | 1% |

In table 1, proportions are indicated as weight percent for the whole composition.

### Properties of the cured compositions

The resulting properties of compositions A to C can be found in table 2 below:

**Table 2**

| | **A (comparative)** | **B** | **C** |
|---|---|---|---|
| Skin formation (min) 28% relative humidity | n.d. | 60 | 60 |
| Curing after 24h (mm) | No curing | 2.3 | 1.8 |
| Secant modulus at 100% elongation at 23°C (substrate mortar M1) (in MPa) | n.d. | 0.3 | < 0.4 |
| Elastic recovery (in %) | n.d. | 70 | > 70 |

| | | | |
|---|---|---|---|
| n.d. : not determined | | | |

The comparative composition A comprising a zirconium octoate did not cure under the above-mentioned conditions.

The results from table 2 show that compositions B and C (according to the invention) advantageously lead to low modulus elastic sealants, given that:
- the secant modulus at 100% elongation (23°C) is ≤ 0.40 MPa at 23°C; and
- the elastic recovery is ≥ 70%.

## Claims

1. Curable composition, preferably moisture-curable composition, comprising:
a) at least one silane-functional polymer P; and
b) at least one metal salt of neodecanoic acid , wherein the metal salt is chosen from the group consisting of alkali metal salts and alkali earth metal salts.

2. Curable composition according to claim 1, wherein the silane-functional polymer P comprises at least one group, preferably at least two groups, having the following formula (I):
-Si(R⁴)ₚ(OR⁵)₃₋ₚ (I)
in which:
- R⁴ is a linear or branched monovalent hydrocarbon radical having 1 to 10 carbon atoms, more preferably methyl or ethyl;
- R⁵, identical or different, represents each an acyl radical, or a linear or branched, monovalent hydrocarbon radical having 1 to 10 carbon atoms, preferably from 1 to 5 carbon atoms, more particularly R⁵ being methyl or ethyl;
- or two radicals R⁵ form a cycle; and
- p is 0, 1 or 2.

3. Curable composition according to claim 2, wherein the silane-functional polymer P comprises groups having the formula (I) which are chosen from the group consisting of a trimethoxysilyl group, a triethoxysilyl group, a methyldimethoxysilyl group, a methyldiethoxysilyl group, a dimethylmethoxysilyl group, a dimethylethoxysilyl group.

4. Curable composition according to any one of claims 1 to 3, wherein the silane-functional polymer P comprises trimethoxysilyl or triethoxysilyl end groups, preferably trimethoxysilyl end groups.

5. Curable composition according to any one of claims 1 to 4, wherein the silane-functional polymer P has a polyether backbone, a polyester backbone, a poly(ether-ester) backbone, a polyolefin backbone, a polycaprolactone backbone, a polycarbonate backbone, a poly(ether-carbonate) backbone, a poly(meth)acrylate backbone, a polyacetal backbone, a polythioether backbone, a polyurethane backbone, preferably the silane-functional polymer P has a polyether backbone.

6. Curable composition according to any one of claims 1 to 5, wherein the silane-functional polymer P is a silane-functional polymer P3 having the following formula (VI):
(R⁵O)₃₋ₚ(R⁴)ₚSi-R⁰-[OR²]ₙ-R⁰-Si(R⁴)ₚ(OR⁵)₃₋ₚ (VI)
wherein:
- R⁰ represents a divalent alkylene radical, linear or branched, comprising from 3 to 6 carbon atoms;
- R² represents a divalent alkylene radical, linear or branched, comprising from 2 to 4 carbon atoms;
- R⁴ and R⁵, identical or different, represents each a linear or branched alkyl radical comprising from 1 to 4 carbon atoms;
- n is an integer such that number average molecular weight of the polyether bloc - [OR²]ₙ- ranges from 300 g/mol to 30 000 g/mol;
- p is 0, 1 or 2, p being preferably 0 or 1.

7. Curable composition according to any one of claims 1 to 6, wherein the total weight content of silane-functional polymer(s) P into the composition ranges from 5% to 80%, preferably from 10% to 60%, and more preferably from 15% to 50% by weight based on the total weight of the composition.

8. Curable composition according to any one of claims 1 to 7, wherein the metal salt of neodecanoic acid is chosen from the alkali metal salts of neodecanoic acid.

9. Curable composition according to any one of claims 1 to 8, wherein the metal salt of neodecanoic acid salt is potassium neodecanoate.

10. Curable composition according to any one of claims 1 to 9, wherein the total weight content of the metal salt(s) of neodecanoic acid in the composition ranges from 0.01% to 5%, preferably from 0.1% to 2%, and more preferably from 0.2% to 1% by weight based on the total weight of the composition.

11. Curable composition according to any one of claims 1 to 10, **characterized in that** it further contains at least one additive for example chosen from the group consisting of: pigments, dyes, adhesion promoters, solvents, drying agents, molecular sieves, anti-oxidant, wetting-agents, UV absorber, reactive diluent, thixotropic agents, fillers, plasticizers, and mixtures thereof.

12. Curable composition according to any one of claims 1 to 11, comprising:
a) from 5% to 80% of weight of silane-functional polymer(s) P;
b) from 0.01% to 5% by weight of metal salt(s) of neodecanoic acid wherein the metal salt is chosen from the group consisting of alkali metal salts and alkali earth metal salts;
c) from 0% to 60%, preferably from 5% to 60% by weight of plasticizer(s); and
d) from 0% to 80%, preferably from 20% to 60% by weight of filler(s).

13. Curable composition according to any one of claims 1 to 12, **characterized in that** it exhibits, in the cured state:
- a secant modulus at 100% extension at 23°C of less than or equal to 0.4 MPa;
- a secant modulus at 100% extension at -20°C of less than or equal to 0.6 MPa; and
- an elastic recovery at 100% elongation of greater than or equal to 70%.

14. Curable composition according to any one of claims 1 to 13, **characterized in that** it is a tin-free composition.

15. Use of the curable composition according to any one of claims 1 to 14, as an adhesive, a sealant and/or a coating material, in particular as a sealant for example construction sealant and even more preferably as exterior facing sealant.

16. Use of at least one neodecanoic acid metal salt, wherein the metal salt is chosen from the group consisting of alkali metal salts and alkali earth metal salts, in presence of a silane-functional polymer for preparing a composition, preferably a sealant composition, having in the cured state the following properties:
- a secant modulus at 100% extension at 23°C of less than or equal to 0.4 MPa;
- a secant modulus at 100% extension at -20°C of less than or equal to 0.6 MPa; and
- an elastic recovery at 100% elongation of greater than or equal to 70%.
